Europäisches Patentamt

European Patent Office

Office européen des brevets

(11) Numéro de publication: **0 336 815**
A1

(12) **DEMANDE DE BREVET EUROPEEN**

(21) Numéro de dépôt: 89400862.2

(22) Date de dépôt: 28.03.89

(51) Int. Cl.⁴: **B 65 G 67/24**
B 65 D 88/62, B 65 D 88/16

(30) Priorité: 05.04.88 FR 8804457

(43) Date de publication de la demande:
11.10.89 Bulletin 89/41

(84) Etats contractants désignés:
AT BE CH DE ES GB GR IT LI LU NL SE

(71) Demandeur: NODET-GOUGIS
5 Boulevard du Général-Leclerc B.P. 36
F-77130 Montereau (FR)

(72) Inventeur: Coulmont, Philippe
5 rue Pierre Brosselette
F-77130 Montereau (FR)

(74) Mandataire: Bérogin, Francis et ai
c/o CABINET HARLE & PHELIP 21 rue de la
Rochefoucauld
F-75009 Paris (FR)

(54) Trémie à flanc déformable et hauteur de chargement réduite.

(57) L'invention concerne une trémie à flanc déformable et hauteur de chargement réduite.

Sur cette trémie, au moins un flanc (51) est déformable et supporté le long de son bord supérieur par un cadre (53) d'armature de soutien. Le bord inférieur de chaque flanc déformable (51) est lié à une organe rigide (55) dans lequel débouche l'ouverture inférieure de vidange de la trémie. L'armature rigide (53) est supportée par un bâti (57, 60, 61) de support de la trémie auquel elle est reliée par un dispositif de manoeuvre (69) qui permet l'abaissement d'au moins une partie du bord supérieur d'au moins un flanc déformable (51) de la trémie, d'un position de stockage et vidange à une position de chargement, et assure ensuite le relevage en position initiale de stockage et vidange.

Application aux trémies notamment de distributeurs de produits pulvérulents, granuleux ou liquides.

FIG. 10

EP 0 336 815 A1

## Description

### Trémie à flanc déformable et hauteur de chargement réduite

La présente invention concerne une trémie destinée à la distribution, par une ouverture inférieure de vidange, d'une charge de produit en vrac, par exemple pulvérulente, granuleuse ou liquide, préalablement introduite dans la trémie par une ouverture supérieure de chargement, et du type tel que les ouvertures supérieure de chargement et inférieure de vidange sont délimitées respectivement par le bord supérieur d'au moins un flanc et par le bord inférieur d' au moins un flanc de la trémie, et l' invention se rapporte plus précisément à une trémie de ce type à flanc déformable et hauteur de chargement réduite.

On connait de nombreux dispositifs, appareils et machines, notamment mobiles, destinés à remplir de nombreuses fonctions différentes, et dont le bon fonctionnement suppose leur alimentation en produits en vrac, de diverses natures selon les fonctions exécutées, à partir d'au moins une trémie, qui doit être rechargée de manière intermittente.

Il en est en particulier ainsi, à titre d'exemple, des appareils distributeurs d'engrais ou de grains, tels que les semoirs en lignes, du type porté sur un atellage conventionnel dit "3 points" d'un tracteur agricole ou du type trainé comme une remorque et comportant chacun au moins une trémie, pour le stockage des produits destinés à ensemencer ou fertiliser les champs.

Une telle trémie, qu'elle soit réalisée à partir de panneaux assemblés en métal, en bois, ou en matière plastique ou qu'elle soit de construction monobloc, métallique ou en une matière synthétique, constitue un ensemble rigide, ayant généralement la forme d'un tronc de pyramide renversée ou d'un tronc de cône à petite base tournée vers le bas.

La capacité d'une telle trémie doit être adaptée aux besoins et à la taille de la machine qu'elle alimente ainsi qu'à l'autonomie de travail que l'on souhaite donner à cette machine.

On comprend aisément que, pour travailler sur de grandes surfaces, il soit avantageux d'utiliser des trémies de capacité importante, afin d'éviter de trop fréquents rechargements des trémies.

Mais, la réalisation de trémies de grand volume interne conduit à des trémies de grande hauteur, si l'on veut conserver de bonnes propriétés d'écoulement des produits, en particulier granuleux ou pulvérulents, qu'elles contiennent (pente d'écoulement) par l'ouverture de vidange à leur petite base en position inférieure.

Le chargement d'une telle trémie s'effectue par l'ouverture de chargement, à sa grande base, située en position haute, souvent même en haut de la machine que la trémie surmonte, à une hauteur variant de 0,8 à 1,5 mètre au-dessus du sol et souvent plus.

Le remplissage d'une telle trémie peut être facilement effectué par basculement d'une benne, à partir d'un engin ou d'une remorque à benne basculante classique, et de sorte que le produit contenu dans la benne soit déversé dans la trémie, par dessus le bord supérieur de cette dernière.

Mais les remorques à benne basculante les plus couramment utilisées, notamment dans les exploitations agricoles, ne permettent pas d'atteindre une hauteur supérieure à environ un mètre du sol, de sorte que les trémies dont le bord supérieur est à une hauteur au-dessus du sol qui est supérieure à cette valeur, ne peuvent pas être facilement remplies à partir de ces remorques.

Dans ce cas, il est nécessaire de recourir à des moyens de chargement supplémentaires, tels que des chargeurs-élévateurs, de différents types, par exemple à godets, à vis sans fin, à pompe, à lit fluidisé, à projection, etc, ou d'utiliser des remorques à benne montée basculante sur un châssis élévateur. Mais ces matériels sont coûteux, et leur mise en oeuvre allonge en général très sensiblement la durée des opérations de chargement des trémies.

Le DE-A-1.531.853 (BEILHACK) décrit un procédé pour vidanger un conteneur, tel qu'une benne de camion, et un dispositif pour la mise en oeuvre de ce procédé, caractérisés par la mise en oeuvre d'une feuille souple ou élastique formant double paroi du conteneur qui est actionnée par un vérin ou analogue pour vidanger le conteneur. Par conséquent, ce document ne décrit pas une trémie à flanc déformable conforme à la revendication 1.

Le US-A-4.541.765 (MOORE) parait le plus proche de l'invention. Ce document décrit en effet un appareil et un procédé pour décharger un matériau en vrac à partir d'une remorque comprenant une chemise rectangulaire repliable ayant une base repliable en forme d'entonnoir reliée à sa partie inférieure à une ouverture de vidange de la remorque, et un ensemble câble-treuil pour lever la chemise et distendre sa base pour permettre la vidange par gravité de cette trémie.

Par conséquent, la revendication 1 annexée se distingue essentiellement du US-A-4.541.765 par le fait que chaque flanc déformable de la trémie est supporté, sensiblement à son bord supérieur, par une armature rigide de soutien qui est supportée par le bâti de support de la trémie, auquel elle est reliée au moins par un dispositif de manoeuvre d'au moins une partie de l'armature rigide. Cette caractéristique est essentielle car elle permet, en particulier, le chargement de la trémie à une hauteur réduite.

L'invention a précisément pour but de proposer des moyens permettant d'effectuer le chargement de trémies directement à partir des remorques à benne basculante les plus courantes, et sans l'assistance d'élévateur-chargeur d'appoint ou complémentaire.

Un autre but de l'invention est de permettre d'abaisser momentanément la hauteur de chargement d'une trémie, sans modifier ses caractéristiques initiales de capacité ni sa pente d'écoulement, en position de vidange.

A cet effet, l'invention propose le produit industriel nouveau que constitue une trémie destinée à la distribution, par une ouverture inférieure de vidange, d'une charge de produit en vrac préalablement introduite dans la trémie par une ouverture supérieure de chargement, et telle que les ouvertures supérieure de chargement et inférieure de vidange sont délimitées respectivement par le bord supérieur d'au moins un flanc et par le bord inférieur d'au moins un flanc de la trémie, cette trémie comprenant un bâti de support de trémie, au moins un flanc de la trémie étant un flanc déformable, chaque flanc déformable étant lié, sensiblement à son bord inférieur à un organe rigide bordant sensiblement et au moins partiellement l'ouverture inférieure de vidange de la trémie, cette trémie étant caractérisée en ce que chaque flanc déformable est supporté, sensiblement à son bord supérieur, par une armature rigide de soutien, cette armature rigide de soutien étant supportée par le bâti de support de trémie, auquel elle est reliée par un dispositif de manoeuvre d'au moins une partie de l'armature rigide, et le dispositif de manoeuvre permet l'abaissement d'au moins une partie du bord supérieur d'au moins un flanc déformable de la trémie, et simultanément d'au moins une partie correspondante de l'armature rigide de soutien, d'une position de stockage et vidange à une position de chargement de la trémie, et assure le relevage de chaque partie de bord supérieur ayant été abaissée pour remettre la trémie en position de stockage et vidange.

On obtient ainsi une trémie au moins partiellement déformable, autorisant une hauteur de chargement très accessible, et inférieure à la hauteur à laquelle se trouve le bord supérieur de la trémie en position de stockage ou de vidange, et présentant, dans cette position, des pentes d'écoulement telles que tout le produit de la charge se vide entièrement de la trémie.

Avantageusement, chaque flanc déformable de la trémie est réalisé en une matière qui est souple ou semi-rigide, de façon à ne pas modifier trop sensiblement la surface latérale de ces flancs.

A titre d'exemple, au moins un flanc déformable, mais avantageusement chacun d'eux, est réalisé en toile ou en bâche, qui est tendue en position de stockage et vidange de la trémie et déformée, par exemple en étant au moins partiellement repliée sur elle-même, en position de chargement, de sorte que, si chaque flanc de la trémie est un flanc déformable, on obtienne ainsi une trémie déformable.

De plus, pour garantir un bon écoulement du produit à distribuer par l'ouverture inférieure de vidange de la trémie, chaque flanc déformable de cette dernière est lié, le long de son bord inférieur, à un unique organe rigide, dans lequel s'ouvre ladite ouverture inférieure de vidange, cet unique organe rigide pouvant être le bâti d'une machine alimentée par la trémie, ou encore le socle ou l'embase du bâti de support de la trémie.

La trémie selon l'invention peut être réalisée avec un dispositif de manoeuvre comprenant des moyens d'abaissement et de relevage d'une partie seulement du pourtour de l'ouverture supérieure de chargement, avec une partie seulement de l'armature rigide. Dans ce cas, il est avantageux que le dispositif de manoeuvre comprenne des moyens d'abaissement et de relevage par pivotement, vis-à-vis du bâti de support de la trémie, d'une partie d'armature qui supporte au moins un flanc déformable le long d'au moins une partie de son bord supérieur.

Mais, selon l'invention, il est également possible que le dispositif de manoeuvre comprenne des moyens d'abaissement et de relevage de tout le pourtour de l'ouverture supérieure de chargement.

Dans les deux cas, pour faciliter la réalisation du dispositif de manoeuvre ainsi que la réalisation de l'armature de soutien et la coopération de cette dernière avec le ou les flancs déformables de la trémie, il est avantageux que l'armature rigide de soutien comprenne au moins un cadre d'armature, qui supporte chaque flanc déformable le long sensiblement de son bord supérieur, et qui entoure l'ouverture supérieure de chargement.

Dans ce mode de réalisation, le cadre d'armature est avantageusement relié au dispositif de manoeuvre par plusieurs appuis répartis autour de l'ouverture supérieure de chargement et pouvant être abaissés et/ou relevés simultanément et/ou indépendamment les uns des autres, afin d'adapter le mode de déformation de la trémie au mode de chargement choisi.

Si l'on souhaite déformer la trémie par un déplacement du cadre d'armature selon une translation d'ensemble, il est avantageux que le dispositif de manoeuvre comprenne des moyens d'abaissement simultané et/ou de relevage simultané des appuis sur des courses de même amplitude verticale.

Par contre, si l'on souhaite déformer la trémie par un déplacement du cadre d'armature selon au moins un pivotement d'ensemble, il est alors avantageux que le dispositif de manoeuvre comprenne des moyens d'abaissement et/ou de relevage des appuis sur des courses d'amplitudes verticales différentes et/ou des moyens d'abaissement et/ou de relevage non simultanés des appuis sur des courses de même amplitude verticale.

Afin de faciliter la déformation de la trémie, le dispositif de manoeuvre comprend avantageusement au moins un organe mécanique de guidage mobile, tel qu'un compas et/ou une barre coulissante et/ou un bras pivotant et/ou une tige télescopique. De plus, si la déformation de la trémie suppose au moins un pivotement de l'armature rigide de soutien par rapport au bâti de la trémie, il peut être avantageux que le dispositif de manoeuvre comprenne également au moins un pivot d'au moins une partie de cette armature sur ledit bâti.

Pour assurer les déplacements d'une partie au moins de l'armature rigide, et en particulier d'un cadre d'armature, le dispositif de manoeuvre comprend avantageusement au moins un actionneur mécanique tel qu'un vérin mécanique ou encore un cric à manivelle. Cependant, il est préférable que le dispositif de manoeuvre comprenne au moins un actionneur à fluide, tel qu'un vérin hydraulique ou pneumatique. En outre, pour faciliter le retour de la trémie en position de stockage ou de vidange, il peut être avantageux que le dispositif de manoeuvre comprenne au moins un organe élastique de rappel, tel qu'un ressort mécanique et/ou à gaz. Lorsque le ou chaque flanc de la trémie est un flanc déformable, il est avantageux que, selon l'invention, le cadre d'armature soit relié en au moins deux points espacés sur son pourtour à un arceau rigide d'armature, lié par au moins une articulation à au moins un montant du bâti support de la trémie qui est érigé à l'extérieur d'au moins un flanc de la trémie et qu'au moins un actionneur prenne appui, d'une part, sur le bâti support, et, d'autre part, sur l'équipage mobile constitué par le cadre et l'arceau d'armature, pour commander l'abaissement ou le relevage du cadre d'armature par pivotement de l'équipage mobile par rapport au bâti support.

Dans ce cas, et selon un exemple avantageusement simple et pratique de réalisation, l'arceau d'armature a sensiblement la forme d'un U rigidement lié par l'extrémité de ses deux branches au cadre d'armature, et dont la base est, d'une part, également rigidement liée par au moins une entretoise au cadre d'armature, et, d'autre part, articulée à pivotement par au moins un pivot, sur une traverse supérieure du bâti support qui est rigidement liée à au moins un montant du bâti auquel est également rigidement liée une traverse inférieure, sur laquelle est articulé chacun de deux actionneurs, constitué par des vérins de manoeuvre et de contreventement, dont chacun est par ailleurs articulé sur l'une respectivement des deux branches de l'arceau en U.

Dans une telle réalisation, chacun des deux vérins peut être un vérin à fluide de manoeuvre et à simple effet, avec rappel élastique, mais, de préférence, on utilise des vérins à fluide de manoeuvre et à double effet.

Selon le meilleur mode de réalisation, connu de la demanderesse à ce jour, et dans le cas d'une trémie ayant la forme d'un tronc de pyramide renversée, à grande base en forme de quadrilatère rectangle, les quatre flancs de la trémie sont constitués de bâches, et le cadre d'armature, de même forme que la grande base en quadrilatère rectangle, est retenu dans un passant formé par repli du bord supérieur des bâches vers l'extérieur, l'arceau en U a sa base sensiblement parallèle à la traverse supérieure du bâti et à un côté du cadre d'armature auquel la base est rigidement liée par plusieurs entretoises ; la base de l'arceau pivote sur la traverse supérieure par plusieurs pivots, répartis sur la longueur de la traverse, et autour d'un axe commun à ces différents pivots qui est sensiblement parallèle à la traverse supérieure ; les deux traverses sont supportées par deux montants latéralement écartés l'un de l'autre, et chaque vérin est un vérin hydraulique à double effet et monté pivotant par l'extrémité de son cylindre sur une extrémité latérale de la traverse inférieure, et par l'extrémité de sa tige télescopique sur une chape rigidement liée à l'extrémité de l'une respectivement des deux branches latérales de l'arceau, qui sont chacunes liées à l'un des deux côtés du cadre qui sont adjacents au côté relié à la base de l'arceau par les entretoises. De la sorte, la trémie est déformée de la position de stockage et de vidange, dans laquelle la ou les bâches de ses quatre flancs est ou sont tendues, à la position de chargement, par basculement du cadre et de l'arceau autour de l'axe de pivotement, sous l'effet de la manoeuvre des deux vérins hydrauliques, et dans un sens qui abaisse le cadre du côté opposé aux montants du bâti support de la trémie. Ainsi, le bâti support sera avantageusement sur le côté avant de la trémie, c'est-à-dire le côté tourné vers le tracteur devant la porter ou devant remorquer la trémie, tandis que le côté abaissé puis relevé pour faciliter le chargement sera le côté arrière de la trémie, en général en saillie vers l'arrière par rapport à la machine alimentée par cette trémie, ce qui facilitera l'approche par l'arrière d'une benne basculante pour procéder au chargement de la trémie par basculement de la benne et déversement des produits qu'elle contient dans la trémie, dont le bord arrière aura été préalablement abaissé dans une mesure suffisante, compte tenu de la hauteur de la benne au-dessus du sol.

La présente invention sera mieux comprise, et d'autres avantages et caractéristiques de l'invention ressortiront de la description donnée ci-dessous, à titre non limitatif, d'exemples de réalisation décrits en référence aux dessins annexés sur lesquels :

La figure 1 représente schématiquement, en élévation de l'arrière, un premier exemple de trémie en tronc de pyramide renversée, de section carrée, et en position de stockage ou de vidange,

La Fig.2 représente schématiquement la trémie de la Fig.1, vue de l'arrière et en position de chargement,

La Fig.3 représente, en élévation latérale, la trémie de la Fig.2 en position de chargement par une benne basculante sur remorque de type agricole,

La Fig.4 représente schématiquement, dans des conditions analogues à la Fig.2, un second exemple de trémie en position de chargement,

La Fig.5 représente, dans les mêmes conditions que la Fig.4, un troisième exemple de trémie en position de chargement,

Les Fig.6 et 7 représentent schématiquement des trémies déformables telles que celles des Fig.4 et 5, et équipées de dispositifs de manoeuvre de deux types différents,

La Fig.8 représente, en perspective et vue de l'arrière, un quatrième exemple de trémie en position haute ou position de stockage ou de vidange, dans laquelle la ou les bâches constituant les flancs de la trémie est ou sont tendues,

La Fig.9 est une vue en perspective sensiblement de profil de la trémie de la Fig.8 en position haute,

La Fig.10 est une vue analogue à la Fig.9, mais sur laquelle la trémie est représentée avec sa partie arrière abaissée, pour faciliter le chargement de la trémie,

La Fig.11 représente une vue en élévation de l'avant de la trémie des Fig.8 à 10, et

La Fig.12 représente une vue en élévation de l'arrière de la trémie des Fig.8 à 11 en position basse ou de chargement, alors que la ou les bâches constituant ses flancs est ou sont déformées.

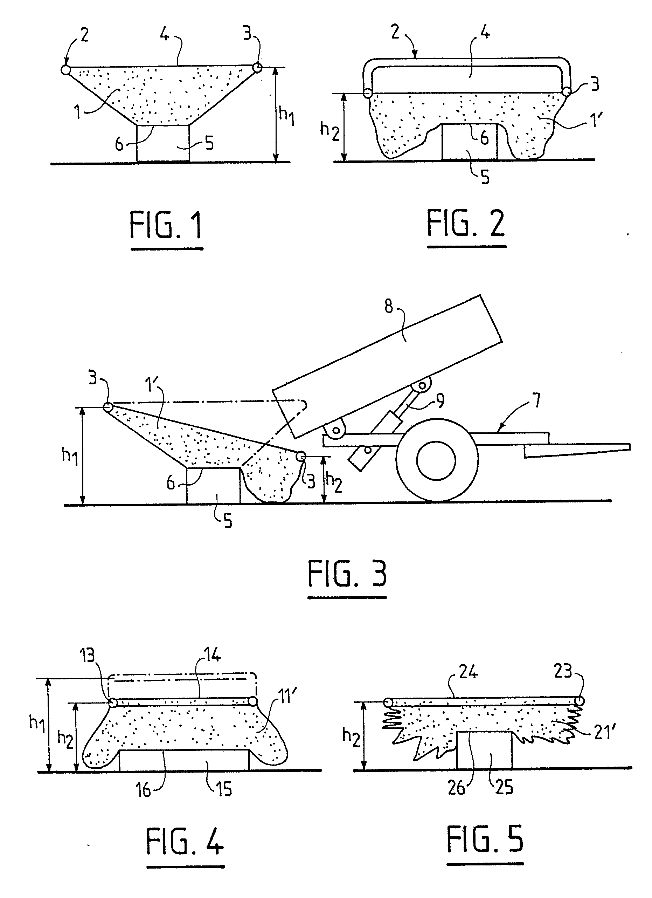

La trémie déformable représentée sur la Fig.1 est une trémie ayant la forme classique d'un tronc de pyramide renversée et de section sensiblement rectangulaire. Cette trémie présente donc quatre flancs 1 de forme trapézoïdale, qui sont chacun réalisés en une matière déformable, de façon à ne pas modifier trop sensiblement la surface latérale de chaque flanc 1. Par exemple, chaque flanc 1 est constitué d'une paroi souple ou semi-rigide, telle qu'une toile ou bâche, imperméable aux produits à stocker dans la trémie et à distribuer par celle-ci, et présentant en outre de bonnes caractéristiques de résistance au déchirement. De telles bâches sont bien connues et réalisées par exemple en tissu de fibres de matière synthétique.

Les quatre flancs déformables 1 de la trémie sont supportés, à la partie supérieure de la trémie, et plus précisément le long du bord supérieur de chacun des quatre flancs 1, par une armature rigide de soutien 2, comprenant un cadre sensiblement rectangulaire et tubulaire 3, qui s'étend sur le périmètre de la grande base de la trémie et qui entoure ainsi l'ouverture supérieure 4 de chargement de la trémie. En outre, chacun des quatre flancs déformables 1 est lié, le long de son bord inférieur, à un socle ou à une embase rigide 5, appartenant au bâti support de la trémie, ou qui peut être le bâti ou un organe rigide d'une machine alimentée par cette trémie, et l'embase 5 entoure l'ouverture inférieure de vidange 6, qui est délimitée par les bords inférieurs des quatre flancs 1, et qui s'ouvre dans cette embase 5.

Dans la position de la Fig.1, qui est la position de stockage ou de vidange du produit contenu dans la trémie par l'ouverture inférieure 6, on constate que le bord supérieur de la trémie est à une certaine hauteur $h_1$ au-dessus du sol et que l'angle de pente O de chaque flanc 1 correspond à une pente minimum acceptable pour garantir un bon écoulement du produit jusqu'à l'ouverture inférieure de vidange 6.

L'armature rigide 2 est reliée par un dispositif de manoeuvre (non représenté), dont des exemples de réalisation seront décrits en référence à certaines figures suivantes, à un bâti support (également non représenté) de la trémie. Ce dispositif de manoeuvre permet de faire pivoter le cadre d'armature 3 sensiblement autour de l'axe de l'un de ses quatre côtés, savoir le côté avant de la trémie, destiné à être tourné vers le tracteur, de sorte que le côté opposé du cadre d'armature 3 peut être abaissé jusqu'à une hauteur $h_2$ au-dessus du sol, qui est indiquée sur les Fig.2 et 3. Au cours de cet abaissement, les trois flancs 1 de la trémie autres que le flanc avant se déforment, du fait du caractère souple ou semi-rigide de la paroi qu'ils constituent, et comme cela est représenté en 1' sur les Fig.2 et 3.

Sur la Fig.3, on constate ainsi que le bord arrière du cadre d'armature 3 se trouve abaissé à la hauteur $h_2$, alors que le bord avant de ce cadre 3 est resté à la hauteur $h_1$. La déformation de cette trémie de la position de stockage maximum, représentée en trait mixte sur la Fig.3, à la position surbaissée au niveau du bord arrière, comme représenté en trait plein sur la Fig.3, facilite le chargement de la trémie par l'approche, par l'arrière de la trémie et en marche arrière, d'une remorque agricole 7 à benne 8 basculante qui, lorsqu'elle sera levée par le vérin 9 de basculement de la benne 8, déversera son chargement dans la trémie, par l'ouverture supérieure de chargement de cette trémie, et par dessus le bord supérieur arrière abaissé de cette trémie.

On obtient ainsi une trémie dont la capacité sera supérieure, à hauteur de chargement égale, à celle d'une trémie rigide conventionnelle présentant les pentes d'écoulement adéquates pour les produits qu'elle est destinée à contenir.

Après le chargement, et éloignement de la remorque 7, le cadre d'armature 3 est relevé en position initiale par le dispositif de manoeuvre, afin de remettre la trémie dans sa position de stockage ou de vidange.

Sur la Fig.4, on a représenté, en position de chargement, un second exemple de trémie déformable et reposant sur un socle 15 dans lequel débouche l'ouverture inférieure de vidange 16, délimitée par les bords inférieurs des flancs souples, se déformant comme représenté en 11', en formant des poches latérales sur les côtés du socle 15, lorsque le cadre d'armature rigide 13, qui supporte les flancs 11' le long de leur bord supérieur et délimite l'ouverture supérieure de chargement 14, est abaissé selon une translation verticale d'ensemble par le dispositif de manoeuvre, et à partir d'une position initiale de vidange ou de stockage, représentée en trait mixte sur la Fig.4. Sur cette figure, on a également indiqué les hauteurs $h_1$ et $h_2$, auxquelles le cadre d'armature 13 se trouve lorsque la trémie occupe respectivement la position de stockage ou de vidange et la position de chargement ou de remplissage.

La trémie représentée sur la Fig.5 est également une trémie déformable, dont les flancs déformables 21' sont supportés le long de leur bord supérieur par un cadre d'armature rigide 23, qui entoure l'ouverture supérieure de chargement 24, et qui est translaté verticalement par un dispositif de manoeuvre, en provoquant de nombreux replis sur eux-mêmes de chacun des flancs 21' réalisé en un matériau très souple. Comme dans les exemples précédents, l'ouverture inférieure de vidange 26, délimitée par les bords inférieurs des flancs déformables 21', débouche dans le socle rigide 25. Le cadre d'armature 23 d'une telle trémie peut également être abaissé jusqu'à la hauteur $h_2$ au-dessus du sol, qui permet un remplissage aisé de la trémie à l'aide d'une remorque 7 à benne basculante 8 du type le plus couramment utilisé dans l'agriculture, et sans l'aide d'un quelconque mécanisme élévateur complémentaire.

Pour assurer des déplacements d'ensemble du cadre d'armature, qui soutient le bord supérieur de la trémie, selon un mouvement de translation à composante verticale d'amplitude désirée aux passages de l'une à l'autre des deux positions caractéristiques de stockage-vidange et de chargement, on peut utiliser un dispositif de manoeuvre de l'armature qui comprend un mécanisme de guidage du cadre dans son mouvement de translation, au moins un organe moteur bidirectionnel, c'est-à-dire commandant les déplacements du cadre dans les deux sens, de l'une à l'autre de ces deux positions caractéristiques, ou au moins un organe moteur unidirectionnel, commandant les déplacements du cadre de la position de stockage-vidange à la position de chargement et assisté d'au moins un organe de rappel élastique, pour déplacer le cadre dans l'autre sens et ramener le cadre et la trémie en position de stockage-vidange, et un ou deux dispositifs de verrouillage du cadre dans l'une et/ou l'autre de ces positions caractéristiques, si de tels dispositifs de verrouillage ne sont pas intégrés à l'organe ou aux organes moteur ni au mécanisme de guidage.

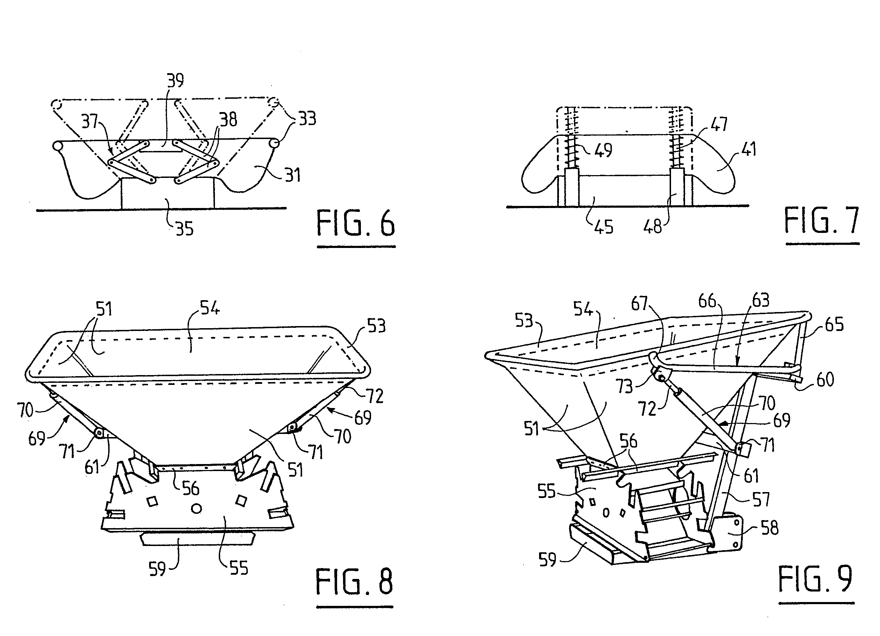

Comme représenté sur la Fig.6, le mécanisme de guidage du dispositif de manoeuvre d'un cadre d'armature 33 soutenant le bord supérieur d'une trémie à quatre flancs 31 déformables et liés le long de leur bord inférieur au socle 35, est un mécanisme comportant, sur chacun de deux côtés opposés de la trémie, deux compas identiques 37, dont les branches sont constituées par deux biellettes 38 de même longueur, montées pivotantes l'une sur l'autre par une de leurs extrémités, et les deux compas 37 sont montés chacun pivotant par l'extrémité libre de sa biellette inférieure sur le socle 35 et par l'extrémité libre de sa biellette supérieure sur une ferrure 39 liée au cadre 33, ou directement sur ce cadre 33, et de sorte que les points d'appui des compas 37 sur le socle 35 soient écartés de la même valeur que les points d'appui du cadre 33 ou de la ferrure 39 sur les compas 37.

Sur la Fig.6, on a représenté en trait mixte la position des compas 37 qui, sur un même côté de la trémie, sont ouverts l'un vers l'autre et ont leurs deux biellettes 38 écartées l'une de l'autre d'un angle d'environ 120°, lorsque la trémie occupe la position de stockage-vidange, alors qu'en position de chargement, représentée en trait plein, les deux biellettes 38 de chaque compas 37 forment entre elles un angle d'environ 60°. Dans cet exemple de réalisation, le cadre d'armature 33 est supporté par quatre points d'appui (correspondants aux extrémités libres des biellettes supérieures des quatre compas 37) qui peuvent varier de hauteur simultanément, pour translater verticalement le cadre 33, ou indépendamment pour les deux points d'appui d'un même côté de la trémie par rapport aux deux points d'appui sur le côté opposé, si l'on veut déplacer le cadre 33 en l'inclinant par pivotement, selon la nature, le nombre, le montage et le mode d'actionnement des organes moteurs commandant les déplacements verticaux du cadre 33, en fonction du mode de chargement choisi de la trémie. Sur la trémie de la Fig.6, les organes moteurs peuvent comprendre, de chaque côté équipé de deux compas 37, un actionneur linéaire, tel qu'un vérin mécanique à vis, ou un vérin à fluide de manoeuvre, pneumatique ou hydraulique, dont une extrémité est articulée à la ferrure 39, entre les pivots sur cette dernière des deux compas 37, et dont l'autre extrémité est articulée sur le socle 35, également entre les pivots sur ce dernier des deux compas 37. On peut également monter un tel vérin entre les deux biellettes 38 d'un compas 37 ou, de préférence, de chaque compas 37. La commande de ces vérins peut être synchronisée ou individualisée d'un côté par rapport à l'autre de la trémie. Dans le cas de vérins à fluide de manoeuvre, il peut s'agir de vérins à double effet, avec mécanisme intégré de verrouillage en positions finales, et commandant les déplacements du cadre 33 dans les deux sens, ou encore de vérins à simple effet, commandant seulement l'abaissement du cadre 33, mais assistés de ressorts mécaniques, par exemple de ressorts hélicoïdaux de compression, ou de ressorts à gaz, pour repousser le cadre 33 en position haute, et remettre la trémie en position de stockage-vidange, à la fin de son chargement. Comme les tracteurs agricoles modernes sont équipés d'un circuit hydraulique de puissance, les actionneurs linéaires utilisés comme organe moteur du dispositif de manoeuvre de l'armature de la trémie déformable seront avantageusement des vérins hydrauliques à double effet.

Sur la variante de réalisation de la Fig.7, le dispositif de manoeuvre de l'armature comprend un mécanisme de guidage des déplacements verticaux du cadre d'armature qui est combiné à un mécanisme de rappel élastique de ce cadre en position haute, sous la forme de barres ou tiges verticales 47 montées coulissantes axialement dans des manchons 48 verticaux et solidaires du socle 45, et telles que les extrémités supérieures des barres ou tiges télescopiques 47 constituent des points d'appui du cadre d'armature soutenant le bord supérieur des flancs déformables 41 de la trémie.

Dans l'exemple de la Fig.7, la forme initiale de la trémie, représentée en trait mixte, est celle d'un parallélèpipède rectangle, dont les quatre flancs 41, en position de chargement de la trémie, forment des poches latérales par rapport au socle 45. Comme dans l'exemple précédent, les organes moteurs peuvent être des actionneurs linéaires, tels que des vérins mécaniques, pneumatiques ou hydrauliques, mais il est également possible que chaque manchon 48 et la barre coulissante 47 correspondante constituent respectivement le cylindre et la tige coulissante d'un vérin hydraulique à simple effet, dont la rétraction de la tige dans le cylindre commande l'abaissement du bord supérieur de la trémie, à l'encontre des ressorts 49, qui assurent ensuite le retour de la trémie en position initiale.

Dans ces différents exemples, il est également possible d'utiliser, comme actionneur, des crics à manivelle ou tout autre dispositif équivalent à crémaillère, entraînés mécaniquement ou électriquement.

On a représenté sur les Fig.8 à 12, un exemple préféré de réalisation d'une trémie déformable et à hauteur de chargement réduite, pour distributeur d'engrais ou de graines à supporter par l'attelage "3 points" d'un tracteur agricole.

Dans cet exemple, on retrouve une trémie en forme de tronc de pyramide renversée et de section sensiblement rectangulaire, dont chacun des quatre flancs déformables 51 est constitué d'une bâche souple, soutenue le long de son bord supérieur par l'un des quatre côtés d'un cadre rectangulaire, rigide et tubulaire 53, qui est presque entièrement caché dans des passants constitués par des replis des bords supérieurs des bâches qui sont rabattus à l'extérieur et fixés, par tout moyen approprié (couture, bouton-pression, rivet, etc.) contre les flancs 51 correspondants. Ainsi, le cadre d'armature 53 entoure l'ouverture supérieure de chargement 54 de la trémie, dont l'ouverture inférieure de vidange débouche dans une embase rigide 55, qui n'est autre que le bâti d'un distributeur d'engrais, auquel les quatre flancs souples 51 sont fixés le long de leur bord inférieur sur des cornières 56 bordant et entourant l'ouverture de vidange.

Le bâti-support de la trémie comprend deux montants rigides 57, espacés latéralement l'un de l'autre et érigés parallèlement l'un à l'autre dans des plans verticaux et longitudinaux, en étant chacun légèrement incliné de bas en haut et de l'arrière vers l'avant, sur le côté avant de la trémie. Ces deux montants 57 sont rigidement liés par leur extrémité inférieure, portant des chapes 58 de montage sur le tracteur, à un cadre inférieur 59 qui supporte également l'embase 55. Le bâti support de la trémie comprend également deux traverses rigides, dont l'une est une traverse supérieure 60, de longueur légèrement inférieure à celle du côté avant du cadre 53, cette traverse supérieure 60 étant parallèle à ce côté avant et raccordant rigidement les extrémités supérieures des montants 57 en s'étendant latéralement de part et d'autre de ces derniers, l'autre traverse étant une traverse inférieure 61, raccordant rigidement les parties médianes des deux montants 57 en s'étendant également latéralement de part et d'autre de ces derniers, bien qu'elle soit d'une longueur inférieure à la traverse supérieure 60. Le milieu de la traverse inférieure 61 porte une chape 62 de montage sur le point d'attache en position haute et centrale d'un attelage "3 points" du tracteur agricole, dont les deux points d'attache inférieurs et latéraux sont reliés aux chapes 58 à la base des montants 57.

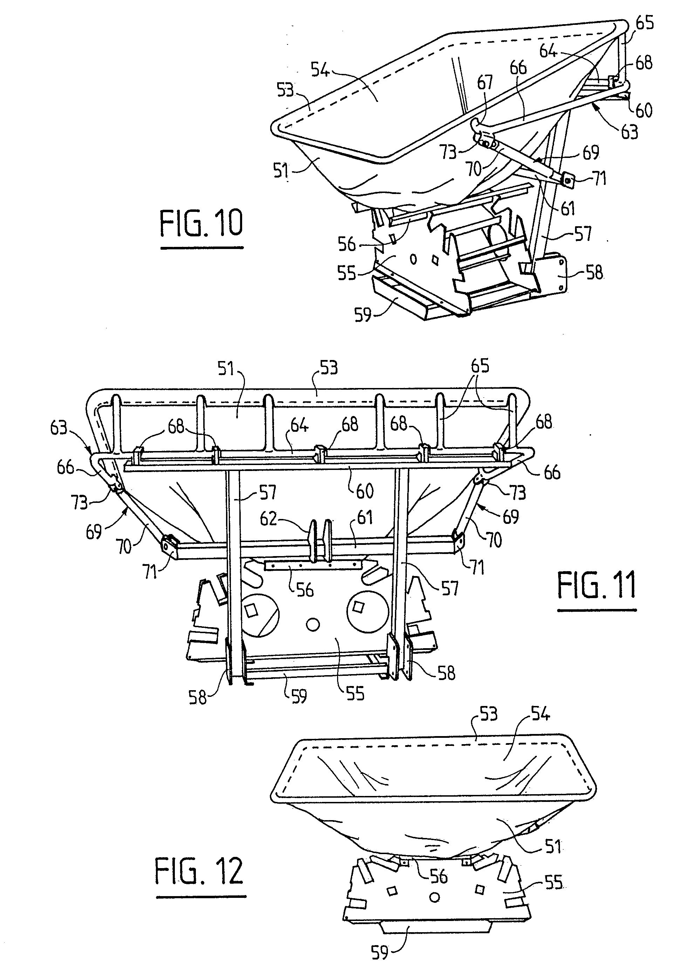

En plus du cadre 53, l'armature rigide de soutien des flancs déformables 51 de la trémie comprend un arceau en U 63, dont la base 64 est de même longueur que le côté avant du cadre 53, et s'étend parallèlement à ce côté et à la traverse supérieure 60, et entre ces deux éléments, en étant rigidement reliée au côté avant du cadre 53 par six entretoises 65 (voir Fig.11) latéralement espacées les unes des autres. Chacun des deux bras latéraux 66 de l'arceau en U 63 est rigidement lié, par son extrémité recourbée 67, sensiblement au milieu de l'un respectivement des deux côtés latéraux du cadre 53, comme représenté sur les Fig.9, 10 et 11. La base 64 de l'arceau 63 s'étend à proximité immédiate et au-dessus de la traverse supérieure 60, à laquelle elle est liée par cinq pivots 68 répartis sur la longueur de cette traverse 60. Chaque pivot 68 est un pivot à charnière, comportant une joue solidaire de la base 64 et qui pivote sur une joue solidaire de la traverse 60, autour d'un axe transversal qui est commun aux cinq pivots 68 et parallèle à la traverse 60. Ainsi, l'armature rigide constituée du cadre 53, de l'arceau 63 et des entretoises 65 forme un équipage mobile monté pivotant sur la traverse supérieure 60 du bâti support de la trémie autour de l'axe transversal commun aux pivots 68. Ces pivotements de l'équipage mobile sont commandés par deux vérins hydrauliques à double effet 69 dont le cylindre 70 de chacun est articulé par son extrémité inférieure dans une chape 71 d'extrémité latérale de la traverse inférieure 61, et dont la tige escamotable 72 de chacun est articulée par son extrémité libre supérieure dans une chape 73 solidaire de l'extrémité recourbée 67 d'un bras latéral 66 correspondant de l'arceau 63.

On comprend ainsi que, lorsque les tiges 72 des vérins 69 sont sorties des cylindres 70, comme représenté sur les Fig.8 et 9, le cadres d'armature 53 est maintenu en position haute, dans laquelle les flancs 51 de la trémie sont tendus, et le bord supérieur de cette trémie sensiblement dans un plan horizontal, ce qui correspond à la position de stockage ou de vidange.

Lorsqu' on commande la rétraction synchronisée des tiges 72 des vérins 69 dans les cylindres 70 correspondants, l'équipage mobile formé du cadre 53, de l'arceau 63 et des entretoises 65 est pivoté autour de l'axe transversal des pivots 68 et selon un mouvement d'ensemble qui abaisse le côté arrière du cadre 53, comme représenté sur les Fig.10 à 12, ce qui a pour effet de déformer en les repliant sensiblement sur eux-mêmes, trois au moins des quatre flancs déformables 51 de la trémie. Dans cette position basse ou déformée de la trémie, dans laquelle le bord supérieur arrière de celle-ci est abaissé, il est facile de déverser, comme décrit ci-dessus en référence à la Fig.3, le chargement d'une benne basculante d'une remorque agricole, afin de procéder au remplissage de la trémie. Ce remplissage étant achevé, on commande ensuite la sortie des tiges 72 hors des cylindres 70 des vérins 69, pour faire basculer le cadre 53 en sens inverse et le ramener en position haute, afin de remettre la trémie en position de travail ou de vidange.

Il est bien entendu que l'invention n'est pas limitée à la forme des trémies en tronc de pyramide renversée, qui n'a été considérée ci-dessus qu'à titre d'exemple. L'invention s'étend au contraire aux trémies en forme de tronc de cône ainsi qu'aux trémies parallèlépipédiques ou aux trémies de forme cylindroconique, ou encore en forme de hotte avec une paroi plate, et éventuellement rigide, à laquelle se rattache une paroi ou un flanc hémicylindrique et déformable. De même, l'invention concerne également les trémies dont certains des flancs ne sont pas déformables, dans la mesure où au moins une partie du bord supérieur d'un flanc déformable peut être abaissée par rapport à la position qu'elle occupe lorsque la trémie est en configuration de travail ou de vidange. De telles trémies sont couramment utilisées dans de nombreux secteurs industriels, pour contenir et distribuer des charges de produits en vrac les plus divers, tels que des produits granuleux, pulvérulents ou liquides.

## Revendications

1. Trémie destinée à la distribution, par une ouverture inférieure de vidange (6), d'une charge de produit en vrac préalablement introduite dans la trémie par une ouverture supérieure de chargement (4), et telle que les ouvertures supérieure de chargement (4) et inférieure de vidange (6) sont délimitées respectivement par le bord supérieur d'au moins un flanc (1) et par le bord inférieur d'au moins un flanc (1) de la trémie, cette trémie comprenant un bâti de support de trémie, au moins un flanc (1) de la trémie étant un flanc déformable, chaque flanc déformable (1) étant lié, sensiblement à son bord inférieur à un organe rigide (5) bordant sensiblement et au moins partiellement l'ouverture inférieure de vidange (6) de la trémie, cette trémie étant caractérisée en ce que chaque flanc déformable (1) est supporté, sensiblement à son bord supérieur, par une armature rigide de soutien (2), cette armature rigide (2) de soutien étant supportée par le bâti de support de trémie, auquel elle est reliée par un dispositif de manoeuvre d'au moins une partie de l'armature rigide (2), et le dispositif de manoeuvre permet l'abaissement d'au moins une partie du bord supérieur d'au moins un flanc déformable (1) de la trémie, et simultanément d'au moins une partie correspondante de l'armature rigide (2) de soutien, d'une position de stockage et vidange à une position de chargement de la trémie, et assure le relevage de chaque partie de bord supérieur ayant été abaissée pour remettre la trémie en position de stockage et vidange.

2. Trémie selon la revendication 1, caractérisée en ce que chaque flanc déformable (51) de la trémie est réalisé en une matière qui est souple ou semi-rigide.

3. Trémie selon l'une des revendications 1 et 2, caractérisée en ce qu'au moins un flanc déformable (51) est réalisé en toile ou en bâche, qui est tendue en position de stockage et vidange et déformée, de préférence repliée sur elle-même, en position de chargement de la trémie.

4. Trémie selon l'une des revendications 1 à 3, caractérisée en ce que chaque flanc (51) de la trémie est un flanc déformable.

5. Trémie selon l'une des revendications 1 à 4, caractérisée en ce que chaque flanc déformable (51) est lié, le long de son bord inférieur, à un unique organe rigide (55, 56) dans lequel s'ouvre l'ouverture inférieure de vidange de la trémie.

6. Trémie selon l'une des revendications 1 à 5, caractérisée en ce que le dispositif de manoeuvre comprend des moyens d'abaissement et de relevage d'une partie seulement du pourtour de l'ouverture supérieure de chargement (4) avec une partie seulement de l'armature rigide (2, 3).

7. Trémie selon l'une des revendications 1 à 6, caractérisée en ce que le dispositif de manoeuvre (68, 69) comprend des moyens (69) d'abaissement et de relevage d'une partie d'armature (53, 63, 65), qui supporte au moins un flanc déformable (51) le long d'au moins une partie de son bord supérieur, par pivotement vis-à-vis du bâti de support (57, 60, 61) de la trémie.

8. Trémie selon l'une des revendications 1 à 7, caractérisée en ce que le dispositif de manoeuvre comprend des moyens (37 ; 47-48-49) d'abaissement et de relevage de tout le pourtour de l'ouverture supérieure de chargement (14 ; 24).

9. Trémie selon l'une des revendications 1 à 8, caractérisée en ce que l'armature rigide de soutien (2) comprend au moins un cadre d'armature (3), qui supporte chaque flanc déformable (1) le long sensiblement de son bord supérieur et qui entoure l'ouverture supérieure de chargement (4).

10. Trémie selon la revendication 9, caractérisée en ce que le cadre d'armature (33) est relié au dispositif de manoeuvre par plusieurs appuis (38) répartis autour de l'ouverture supérieure de chargement et pouvant être abaissés et/ou relevés simultanément et/ou indépendamment les uns des autres.

11. Trémie selon la revendication 10, caractérisée en ce que le dispositif de manoeuvre comprend des moyens d'abaissement simultanés cet/ou de relevage simultanés (37, 38, 39) des appuis sur des courses de même amplitude verticale, afin de déplacer le cadre d'armature (33) selon une translation d'ensemble.

12. Trémie selon la revendication 10, caractérisée en ce que le dispositif de manoeuvre comprend des moyens d'abaissement et/ou de relevage des appuis (47, 48, 49 - 37, 38, 39) sur des courses d'amplitudes verticales différentes et/ou des moyens d'abaissement et/ou de relevage non simultanés des appuis sur des courses de même amplitude verticale, afin de déplacer le cadre d'armature (33) selon au moins un pivotement d'ensemble.

13. Trémie selon l'une des revendications 1 à 12, caractérisée en ce que le dispositif de manoeuvre comprend au moins un organe mécanique de guidage mobile, tel qu'un compas (37) et/ou une barre coulissante (47) et/ou un bras pivotant (66) et/ou une tige télescopique (72).

14. Trémie selon l'une des revendications 1 à 13, caractérisée en ce que le dispositif de manoeuvre comprend au moins un pivot (68) d'au moins une partie d'armature (63, 53) sur le bâti de support (57, 60, 61) de la trémie.

15. Trémie selon l'une des revendications 1 à 14, caractérisée en ce que le dispositif de manoeuvre comprend au moins un actionneur mécanique, tel qu'un vérin mécanique ou un cric à manivelle.

16. Trémie selon l'une des revendications 1 à 15, caractérisée en ce que le dispositif de manoeuvre comprend au moins un actionneur à fluide (69), tel qu'un vérin hydraulique ou pneumatique.

17. Trémie selon l'une des revendications 1 à 16, caractérisée en ce que le dispositif de manoeuvre comprend au moins un organe de rappel élastique (49) vers la position de stockage et vidange, tel qu'un ressort mécanique et/ou à gaz.

18. Trémie selon l'une des revendications 13 à 17, telle que rattachée à la revendication 9, caractérisée en ce que le cadre d'armature (53) est relié en au moins deux points (67) espacés sur son pourtour, à un arceau rigide d'armature (63) lié par au moins une articulation (68) à au moins un montant (57) du bâti support de la trémie, qui est érigé à l'extérieur d'au moins un flanc (51) de la trémie, et en ce qu'au moins un actionneur (69) prend appui, d'une part, sur le bâti support (57, 60, 61) et, d'autre part, sur l'équipage mobile constitué par le cadre (53) et l'arceau d'armature (63), pour commander l'abaissement ou le relevage du cadre d'armature (53) par pivotement de l'équipage mobile par rapport au bâti support.

19. trémie selon la revendication 18, caractérisée en ce que l'arceau d'armature (63) a sensiblement la forme d'un U rigidement lié par l'extrémité (67) de ses deux branches (66) au cadre d'armature (53), et dont la base (64) est, d'une part, également rigidement liée par au moins une entretoise (65) au cadre d'armature (53), et, d'autre part, articulée à pivotement par au moins un pivot (68) sur une traverse supérieure (60) du bâti support qui est rigidement liée à au moins un montant (57) du bâti, auquel est également rigidement liée une traverse inférieure (61), sur laquelle est articulé chacun de deux actionneurs (69) constitué par des vérins de manoeuvre et de contreventement, dont chacun est par ailleurs articulé sur l'une respectivement des deux branches (66) de l'arceau en U (63).

20. Trémie selon la revendication 19, ayant la forme d'un tronc de pyramide renversée à grande base en quadrilatère rectangle, caractérisée en ce que ses quatre flancs (51) sont constitués de bâches, son cadre d'armature (53) a la même forme que la grande base en quadrilatère rectangle, et est retenu dans au moins un passant formé par repli du bord supérieur des bâches vers l'extérieur, l'arceau en U (63) a sa base (64) sensiblement parallèle à la traverse supérieure (60) et à un côté du cadre (53) auquel la base est rigidement liée plusieurs entretoises (65), la base (64) de l'arceau (63) pivotant sur la traverse supérieure (60) par plusieurs pivots (68), répartis sur la longueur de la traverse supérieure (60), et autour d'un axe commun sensiblement parallèle à ladite traverse (60), les deux traverses (60, 61) étant supportées par deux montants (57) latéralement espacés l'un de l'autre, chaque vérin (69) étant à double effet et monté pivotant par l'extrémité de son cylindre (70) sur une extrémité latérale (71) de la traverse inférieure (61) et par l'extrémité de sa tige télescopique (72) sur une attache (73) rigidement liée à l'extrémité (67) de l'une respectivement des deux branches latérales (66) de l'arceau (63), lesdites branches (66) étant chacunes liées à l'un des deux côtés du cadre (53) qui sont adjacents au côté relié à la base (64) de l'arceau (63) de sorte que la trémie est déformée de la position de stockage et vidange à la position de chargement par basculement du cadre (53) et de l'arceau (63) autour de l'axe commun des pivots (68), par la manoeuvre des deux vérins (69), et dans un sens qui abaisse le cadre (63) du côté opposé aux montants (57) du bâti.

FIG. 1

FIG. 2

FIG. 3

FIG. 4

FIG. 5

FIG. 6

FIG. 7

FIG. 8

FIG. 9

EP 0 336 815 A1

FIG. 10

FIG. 11

FIG. 12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X<br>Y<br><br>A | DE-A-1 531 853  (BEILHACK)<br>* En entier * | 1-3,8,<br>13,16<br>4-7,9-<br>12,14,<br>15,18<br>19,20 | B 65 G  67/24<br>B 65 D  88/62<br>B 65 D  88/16 |
| D,Y<br><br>A | US-A-4 541 765  (MOORE)<br>* En entier * | 4-7,9-<br>12<br>1,18-20 | |
| Y<br><br><br>A | FR-A-2 050 224  (MEDUS)<br>* Figures 1,2; page 2, ligne 20 - page 3, ligne 27 * | 14,18<br><br>15,19,<br>20 | |
| Y<br><br>A | FR-A-1 542 425  (JARRY)<br>* En entier * | 15<br><br>1 | |
| A | DE-B-1 229 902  (SILFVERSKIÖLD)<br>* En entier * | 1-20 | DOMAINES TECHNIQUES RECHERCHES (Int. Cl.4)<br><br>B 65 G<br>B 65 D |

Le présent rapport a été établi pour toutes les revendications

| Lieu de la recherche | Date d'achèvement de la recherche | Examinateur |
|---|---|---|
| LA HAYE | 09-06-1989 | WERNER D.M. |

EPO FORM 1503 03.82 (P0402)